**Europäisches Patentamt**

(19) **European Patent Office**

**Office européen des brevets**

(11) Veröffentlichungsnummer: **0 050 344**
**B1**

(12) # EUROPÄISCHE PATENTSCHRIFT

(45) Veröffentlichungstag der Patentschrift:
06.03.85

(51) Int. Cl.⁴: **B 23 C 5/26**

(21) Anmeldenummer: 81108461.5

(22) Anmeldetag: 17.10.81

(54) **Kombinationswerkzeug.**

(30) Priorität: 18.10.80 DE 3039456

(43) Veröffentlichungstag der Anmeldung:
28.04.82 Patentblatt 82/17

(45) Bekanntmachung des Hinweises auf die Patenterteilung:
06.03.85 Patentblatt 85/10

(84) Benannte Vertragsstaaten:
**AT BE CH DE FR GB IT LI NL SE**

(56) Entgegenhaltungen:
**EP - A - 0 015 248**
**CH - A - 583 084**
**DE - A - 2 405 506**
**DE - B - 1 552 556**
**DE - B - 2 328 176**
**DE - U - 7 827 203**
**DE - U - 8 027 894**

(73) Patentinhaber: **Hahn & Kolb, Königstrasse 14,
D-7000 Stuttgart 1 (DE)**

(72) Erfinder: **Betz, Wolfgang, Fuchshofweg 9,
D-7060 Schorndorf (DE)**
Erfinder: **Hoffmann, Erich, Am Lauterwald,
D-7531 Ölbronn-Dürnn (DE)**

(74) Vertreter: **Hoeger, Stellrecht & Partner,
Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Kombinationswerkzeug aus einem Schaftfräser und einer mit diesem durch Formschluß drehfest verbundenen, in eine Arbeitsspindel einsetzbaren Fräserhülse, dessen Schaftfräser in seinem hinteren Bereich eine seinem Hinterende zugewandte, zur Schaftachse senkrechte Anlagefläche und hinter dieser zwei hintereinander angeordnete kreiszylindrische und zur Schaftachse koaxiale Schaftteilstücke aufweist, von denen das hintere einen kleineren Durchmesser als das vordere besitzt, und dessen Fräserhülse eine nach vorn offene, zur Werkzeugachse koaxiale Ausnehmung, die zu den Schaftteilstücken unterschiedlichen Durchmessers komplementär mit kleiner Passungstoleranz ausgebildet ist, und im Bereich ihres vorderen Stirnendes eine zur Hülsenachse senkrechte Anlagefläche für die Anlagefläche des Schaftfräsers aufweist sowie eine von hinten in den Schaftfräser einschraubbare Spannschraube aufnimmt, wobei an der einen Anlagefläche mindestens ein über diese vorstehender Mitnehmer und in der anderen Anlagefläche eine entsprechende nutartige Ausnehmung vorgesehen ist, in die für eine spielfreie Drehverbindung zwischen Schaftfräser und Fräserhülse der Mitnehmer passend einschiebbar ist.

Ein Kombinationswerkzeug der vorstehend erläuterten Art, welches als Werkzeug anstelle eines Schaftfräsers ein Ausbohrwerkzeug besitzt, ist aus der EP-A-15 248 bekannt.

Das Ausbohrwerkzeug ist in einem Werkzeughalter befestigt, welcher an seiner Rückseite die beiden kreiszylindrischen Schaftteilstücke aufweist. Der Drehmomentübertragung zwischen Hülse und Werkzeughalter dienen ein an letzterem befestigter Nutstein und eine entsprechende Nut an der Hülse, wobei diese beiden Mitnehmerelemente mittig zu einer axialen Durchmesserebene des Kombinationswerkzeugs angeordnet sind. Die hintereinanderliegenden kreiszylindrischen Schaftteilstücke des Werkzeughalters besitzen relativ kleine axiale Abmessungen, so daß auch die rückseitige Stirnfläche des hinteren Schaftteilstücks einen relativ kleinen axialen Abstand von der zur Schaftachse senkrechten Anlagefläche des Werkzeughalters aufweist, nämlich einen Abstand von ca. 1/3 des Durchmessers des hinteren Schaftteilstücks. Durch den von den beiden Schaftteilstücken gebildeten Ansatz des Werkzeughalters soll dieser in der Hülse zentriert werden, während auf das Ausbohrwerkzeug einwirkende Seitenkräfte, die die Verbindung von Werkzeughalter und Hülse auf Biegung beanspruchen, durch die Spannschraube aufgenommen werden sollen (s. Seite 3, Zeilen 12 bis 15 der EP-A-15 248). Dies mag für ausschließlich in Axialrichtung beanspruchte Ausbohrwerkzeuge eine akzeptable Lösung sein, nicht aber für Fräswerkzeuge, die im Einsatz einer Wechselbiegebeanspruchung unterliegen. Denselben Nachteil besitzt das Kombinationswerkzeug nach der DE-U-7 827 203, bei dem die axiale Länge zweier kreiszylindrischer Schaftteilstücke nur einen Bruchteil der Durchmesser dieser Schaftteilstücke beträgt.

Der Erfindung lag die Aufgabe zugrunde, das an erster Stelle geschilderte bekannte Kombinationswerkzeug so zu verbessern, daß auch ein durch große Schnittkräfte beanspruchter Schaftfräser trotz der bei einem solchen Werkzeug unvermeidlichen hohen Wechselbiegebeanspruchung mit Sicherheit dauerhaft mit optimaler Rundlaufgenauigkeit in einer Fräserhülse gehalten werden kann, ohne daß enge Passungstoleranzen das Einsetzen des Schaftfräsers in die Fräserhülse beschwerlich machen würden. Ausgehend von einem Kombinationswerkzeug der eingangs erwähnten Art läßt sich diese Aufgabe erfindungsgemäß dadurch lösen, daß der Abstand des Hinterendes des hinteren kreiszylindrischen Schaftteilstücks von der Anlagefläche des Schaftfräsers mindestens gleich dem 1,5fachen des Durchmessers dieses Schaftteilstücks ist, daß die Passungstoleranz für das hintere Schaftteilstück kleiner als für das vordere Schaftteilstück ist und daß die Ausnehmung für den Mitnehmer gegenüber einem Durchmesser entgegen der Werkzeugdrehrichtung versetzt ist. Das zuletzt erwähnte Merkmal dient dabei dem Zweck, hohe Drehmomente über die Fräserhülse in den Schaftfräser einleiten zu können, ohne daß die Gefahr besteht, daß die in Drehrichtung vordere Flanke der den Mitnehmer aufnehmenden Ausnehmung ausbricht; durch den Versatz von Mitnehmer und zugehöriger Ausnehmung entgegen der Werkzeugdrehrichtung erhält man eine größere radiale Höhe für die in Drehrichtung vorn liegende Ausnehmungsflanke und erreicht gleichzeitig, daß die letztere durch einen ausgedehnteren Materialbereich abgestützt wird als im Falle einer Ausnehmung, welche symmetrisch zu einem Durchmesser angeordnet ist.

Die erfindungsgemäße Konstruktion eignet sich auch für Schaftfräser, deren Durchmesser am Schneidenteil über 50 mm beträgt und/oder für solche Kombinationswerkzeuge, die auf besonders leistungsstarken Werkzeugmaschinen eingesetzt werden sollen. Durch die Erfindung wurde auch ein besonders kostengünstiges Prinzip für Fräser-Kombinationswerkzeuge geschaffen, da sich die Fräserhülse weiterbenutzen läßt, wenn der Schneidenteil des Schaftfräsers infolge Verschleißes verbraucht ist. Auch lassen sich die Schaftfräser durch entsprechende Fräserhülsen an Werkzeugmaschinen mit unterschiedlich gestalteten Werkzeugaufnahmen anpassen. Da die Fräserhülse nicht zusammen mit einem verschlissenen Fräser verworfen werden muß, kann sie aus einem hochwertigen Werkzeugstahl hergestellt werden, der es ermöglicht, ihr eine Oberflächenhärte zu geben, die Deformationen bei der automatischen Handhabung des Kombinationswerkzeuges durch an der Fräserhülse angreifende Greifer automatischer Werkzeug

wechseleinrichtungen ausschließt.

Versuche haben gezeigt, daß die geforderte Rundlaufgenauigkeit des Schaftfräsers mit Sicherheit erreichbar ist, wenn der Fräserschaft in seinem hinteren Bereich mit hinreichend langen oder in hinreichendem axialem Abstand voneinander angeordneten, kreiszylindrischen Schaftteilstücken ausgestattet ist, von denen das hintere einen kleineren Durchmesser als das vordere aufweist, und wenn durch Spannmittel gewährleistet wird, daß die Anlageflächen von Schaftfräser und Fräserhülse plan aneinander anliegen. Bei Konstruktionen, bei denen die beiden Schaftteilstücke unterschiedlichen Durchmessers in axialem Abstand voneinander angeordnet sind, empfiehlt es sich, den Querschnitt des zwischen diesen Schaftteilstücken liegenden Fräserschaftbereichs möglichst groß zu gestalten.

Bei einer hinsichtlich des axialen Anziehens des Schaftfräsers nicht kritischen Ausführungsform des erfindungsgemäßen Kombinationswerkzeugs sind die Längen der zu den Schaftteilstücken unterschiedlichen Durchmessers gehörenden Teilstücke der Hülsenausnehmung größer als die Längen der entsprechenden Schaftteilstücke.

Um in Drehrichtung zwischen Fräserhülse und Schaftfräser eine absolute Spielfreiheit zu erzielen und den Schaftfräser dennoch problemlos in die Fräserhülse einführen zu können, empfiehlt es sich, die die Ausnehmung zur Aufnahme des Mitnehmers in Drehrichtung sowie in der entgegengesetzten Richtung begrenzenden Wände in radialer und/oder axialer Richtung ballig auszubilden.

Schließlich kann es noch vorteilhaft sein, die Fräserhülse für einen Anzug des Schaftfräsers in axialer Richtung statt mit einer Spannschraube mit einer Kraftspannvorrichtung zu versehen.

In der Zeichnung sind zwei bevorzugte Ausführungsformen des erfindungsgemäßen Kombinationswerkzeugs dargestellt; es zeigt

Figur 1 eine in der Länge verkürzte und teilweise aufgebrochene Seitenansicht der ersten Ausführungsform des Kombinationswerkzeugs;

Figur 2 eine Seitenansicht des Schaftfräsers dieser ersten Ausführungsform;

Figur 3 eine der Figur 1 entsprechende Darstellung der zweiten Ausführungsform, und

Figur 4 eine Stirnansicht des Schaftfräsers der zweiten Ausführungsform, gesehen in Richtung des Pfeils C aus Figur 3.

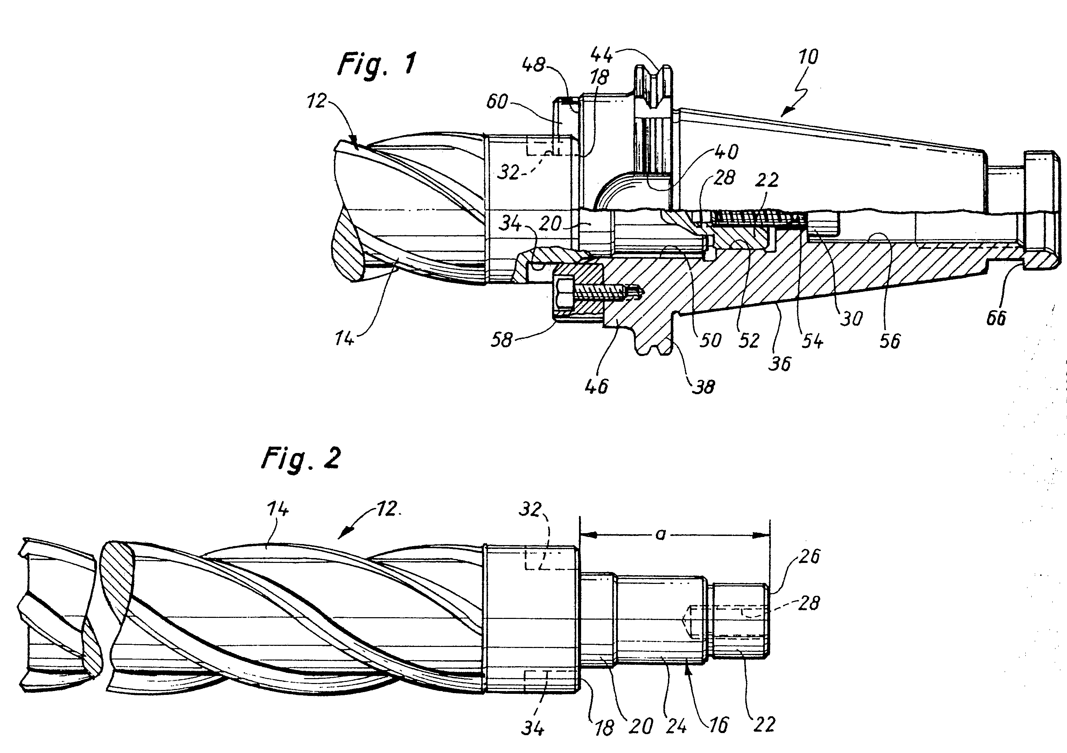

Das Kombinationswerkzeug nach den Figuren 1 und 2 besitzt eine Fräserhülse 10 und einen in dieser drehfest, jedoch lösbar angeordneten Schaftfräser 12. Beide Teile sind konstruktiv so aufeinander abgestimmt, daß es möglich ist, den Schaftfräser wiederholbar mit optimaler Rundlaufgenauigkeit in die Fräserhülse einzusetzen und mit dieser zu verbinden. Zu diesem Zweck ist am Hinterende des die Fräserschneiden aufweisenden Schaftteils 14 des Schaftfräsers ein weiterer Schaft 16 angeformt, der im Durchmesser derart vermindert ist, daß der Schaftfräser eine nach hinten weisende ebene Anlagefläche 18 besitzt, die senkrecht zur Schaftachse ist. Am vorderen und hinteren Ende des Schafts 16 sind kreiszylindrische Schaftteilstücke 20 und 22 vorgesehen, die unterschiedliche Durchmesser aufweisen, und zwar besitzt das vordere Schaftteilstück 20 einen größeren Durchmesser als das hintere Schaftteilstück 22. Der zwischen beiden Schaftteilstücken liegende Schaftteil 24 ist im Durchmesser nur geringfügig kleiner als das Schaftteiltück 20, wobei der Durchmesserunterschied vorteilhafterweise nur Bruchteile eines Millimeters beträgt.

Der Abstand der beiden Schaftteilstücke 20 und 22 voneinander entspricht vorzugsweise mindestens dem Durchmesser des Schaftteilstücks 20, und das Maß »a«, d. h. die Länge des Schafts 16, beträgt mindestens das 1,5fache des Durchmessers des Schaftteilstücks 22.

Beide Schaftteilstücke weisen die gleiche Passungsqualität auf, beispielsweise bei System-Einheitswelle h, wobei jedoch die Passung des hinteren Schaftteilstücks 22 zu derjenigen des vorderen Schaftteilstücks 20 um eine Toleranzstufe differiert. Das Schaftteilstück 20 weist vorzugsweise einen Durchmesser von 32 h 5 und das hintere Schaftteilstück 22 einen Durchmesser von 25 h 4 auf. Der Durchmesser des hinteren Schaftteilstücks 22 könnte aber auch größer gewählt werden, beispielsweise 30 h 4.

In das Zentrum der Stirnfläche 26 des hinteren Schaftteilstücks 22 ist eine Gewindebohrung 28 zum Einschrauben einer Spannschraube 30 (s. Figur 1) eingearbeitet.

Das Schaftteilstück 14 besitzt hinten an seinem Umfang zwei Eingriffsnuten 32 und 34, die einander ungefähr diametral gegenüberliegen und sich, ausgehend von der ringförmigen Anlagefläche 18, achsparallel in das hintere Endstück des Schaftteilstücks 14 hineinerstrecken.

Die Fräserhülse 10 besitzt einen Steilkegel 36, an dessen den größeren Durchmesser aufweisendem Ende ein nach außen gerichteter Mitnahmeflansch 38 angeformt ist, der zwei einander diametral gegenüberliegende Eingriffsnuten 40 besitzt und in dessen Umfang eine Umfangsnut 44 eingearbeitet ist, um die Fräserhülse bzw. das Kombinationswerkzeug als Ganzes auch zur Handhabung durch automatische Werkzeugwechseleinrichtungen geeignet zu machen.

An der vorderen Stirnseite dieses Mitnahmeflansches 38 ist ein zylindrischer Bund 46 angeformt, der eine zur Längsachse der Fräserhülse senkrechte, ringförmige Abstützfläche 48 bildet. Von diesem vorderen Stirnende aus sind in die Fräserhülse zueinander koaxiale, zylindrische Hülsenausnehmungen 50, 52, 54 und 56 eingearbeitet, wobei die letztere vom Hinterende des Steilkegels aus zugänglich ist. Die beiden vorderen Hülsenausnehmungen 50 und 52 sind komplementär zu den beiden Schaftteilstücken 20 und 22 des Schaftfräsers ausgebildet, wobei die axiale Länge der Hülsenausnehmungen 50, 52 größer ist als diejenige der Schaftteilstücke 20 und 22. Mit Hilfe der durch die Hülsenausnehmung 54 hindurchsteckbaren Spannschraube 30, die über die Hülsenausnehmung 56 mittels eines Schlüssels zugänglich ist, lassen sich Schaftfräser und Fräserhülse gegenseitig derart verspannen, daß die Anlageflächen 18 und 48 unter Druck plan aneinander anliegen. Die beiden in axialem Abstand voneinander vorgesehenen Schaftteilstücke 20 und 22 bewirken zusammen mit den Anlageflächen 18 und 48 im zusammengespannten Zustand mit der Fräserhülse eine einwandfreie koaxiale Ausrichtung dieser beiden Werkzeugteile zueinander, so daß höchste Rundlaufgenauigkeit sichergestellt ist. Hierunter ist eine Achsabweichung von maximal 0,003 mm zu verstehen.

Die Drehmomentübertragung von Fräserhülse zu Schaftfräser wird mit Hilfe von nutensteinförmigen Mitnehmern 58 und 60 bewirkt, die zu den Eingriffsnuten 40 des Mitnahmeflanschs 38 um 90° versetzt einander ungefähr diametral gegenüberliegend an der Abstützfläche 48 der Fräserhülse vorgesehen sind und die formschlüssig in die Eingriffsnuten 32 und 34 des Schaftfräsers über einen Teil ihrer Länge eingreifen. Die Mitnehmer sind in Paßnuten eingesetzt, die ihrerseits in die Abstützfläche 48 der Fräserhülse eingearbeitet sind, und dort festgeschraubt.

Die Fräserhülse besitzt am hinteren Ende ihres Steilkegels 36 eine Umfangsnut 66, um sie in dem zum Steilkegel komplementären Innenkegel im Spindelkopf einer Arbeitsspindel maschinell verspannen zu können.

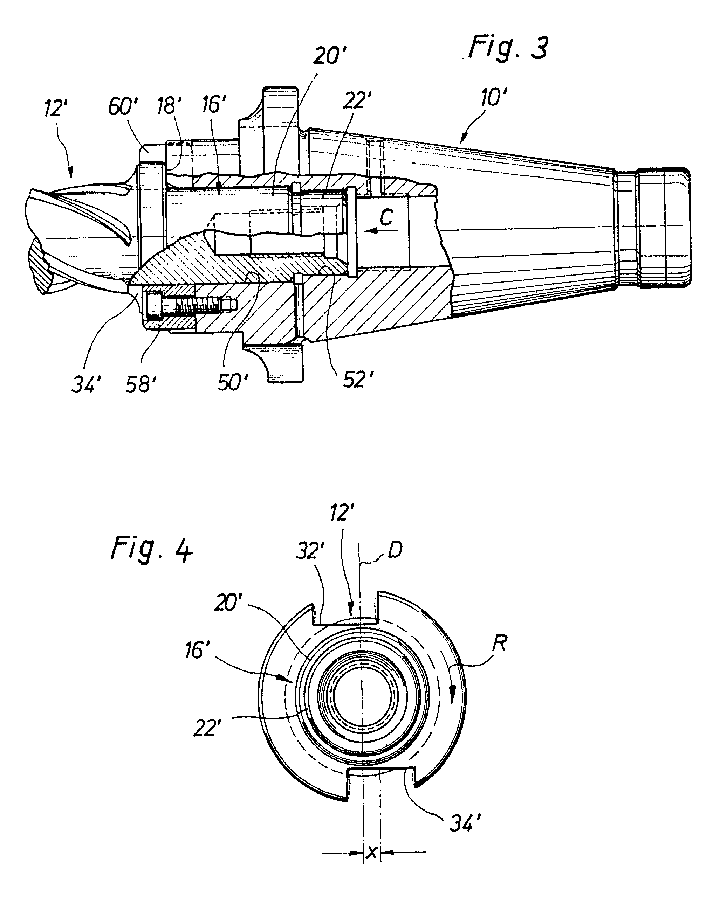

Für die Ausführungsform nach den Figuren 3 und 4 wurden dieselben Bezugszeichen wie in den Figuren 1 und 2 verwendet, lediglich unter Hinzufügung eines Strichs. Deshalb wird im folgenden nur auf die Unterschiede der zweiten Ausführungsform nach den Figuren 3 und 4 gegenüber der ersten Ausführungsform eingegangen.

Bei dem Schaftfräser 12' liegen die beiden Schaftteilstücke 20' und 22' unterschiedlichen Durchmessers in ganz geringem Abstand hintereinander, und die zugehörigen Hülsenausnehmungen 50' und 52' sind entsprechend dimensioniert und angeordnet.

Die Eingriffsnuten 32' und 34' des Schaftfräsers 12 sind gegenüber einem Durchmeser D (s. Figur 4) entgegen der Drehrichtung R versetzt, um so die in Drehrichtung vorn liegenden Seitenwände der Eingriffsnuten zu vergrößern und größere Anlageflächen für die nutensteinförmigen Mitnehmer 58' und 60' zu schaffen. In Figur 4 wurde strichpunktiert angedeutet, daß die Seitenwände der Eingriffsnuten 32' und 34' leicht ballig ausgebildet sein können (der Grad der Balligkeit wurde in der Zeichnung stark übertrieben), wodurch erreicht wird, daß sich die Mitnehmer 58' und 60' leichter in die Eingriffsnuten 32' und 34' einschieben lassen, wenn mit extremer Spielfreiheit gearbeitet wird.

## Patentansprüche

1. Kombinationswerkzeug aus einem Schaftfräser (12; 12') und einer mit diesem durch Formschluß drehfest verbundenen, in eine Arbeitsspindel einsetzbaren Fräserhülse (10; 10'), dessen Schaftfräser (12; 12') in seinem hinteren Bereich eine seinem Hinterende zugewandte, zur Schaftachse senkrechte Anlagefläche und hinter dieser zwei hintereinander angeordnete kreiszylindrische und zur Schaftachse koaxiale Schaftteilstücke (20; 20', 22; 21') aufweist, von denen das hintere (22; 22') einen kleineren Durchmesser als das vordere (20; 20') besitzt, und dessen Fräserhülse (10; 10') eine nach vorn offene, zur Werkzeugachse koaxiale Ausnehmung, die zu den Schaftteilstücken unterschiedlichen Durchmessers komplementär mit kleiner Passungstoleranz ausgebildet ist, und im Bereich ihres vorderen Stirnendes eine zur Hülsenachse senkrechte Anlagefläche (18; 18') für die Anlagefläche des Schaftfräsers aufweist sowie eine von hinten in den Schaftfräser einschraubbare Spannschraube (30) aufnimmt, wobei an der einen Anlagefläche mindestens ein über diese vorstehender Mitnehmer (58; 58') und in der anderen Anlagefläche eine entsprechende nutartige Ausnehmung (32; 32') vorgesehen ist, in die für eine spielfreie Drehverbindung zwischen Schaftfräser und Fräserhülse der Mitnehmer passend einschiebbar ist, dadurch gekennzeichnet, daß der Abstand (a) des Hinterendes des hinteren kreiszylindrischen Schaftteilstücks (22; 22') von der Anlagefläche (18; 18') des Schaftfräsers (12; 12') mindestens gleich dem 1,5fachen des Durchmessers dieses Schaftteilstücks ist, daß die Passungstoleranz für das hintere Schaftteilstück (22; 22') kleiner als für das vordere Schaftteilstück (20; 20') ist und daß die Ausnehmung (32; 32') für den Mitnehmer (58; 58') gegenüber einem Durchmesser (D) entgegen der Werkzeugdrehrichtung (R) versetzt ist.

2. Kombinationswerkzeug nach Anspruch 1, dadurch gekennzeichnet, daß die Länge der zu den Schaftteilstücken (20; 20', 22; 22') unterschiedlichen Durchmessers gehörenden Teilstücke (50, 52) der Hülsenausnehmung größer sind als die Längen der entsprechenden Schaftteilstücke.

3. Kombinationswerkzeug nach Anspruch 1, dadurch gekennzeichnet, daß zur Erleichterung der Einführung des Mitnehmers (58; 58') in die Ausnehmung (34; 34') deren die letztere in Drehrichtung sowie in der entgegengesetzten Richtung begrenzende Wände in radialer und/oder axialer Richtung ballig ausgebildet sind.

4. Kombinationswerkzeug nach Anspruch 1, dadurch gekennzeichnet, daß die Fräserhülse für einen Anzug des Schaftfräsers in axialer Richtung mit einer Kraftspannvorrichtung versehen ist.

## Claims

1. A combination tool comprising an end-milling cutter (12; 12') and a cutter sleeve (10; 10') which is rotationally rigidly connected to the latter by positive locking and is insertable in a work spindle, the rear area of the end-milling cutter (12; 12') of which has a bearing surface facing towards its rear end and perpendicular to the shaft axis and behind the said bearing surface two cylindrical shaft portions (20; 20', 22; 21') arranged one behind the other and coaxial with the shaft axis, of which the rear one (22; 22') has a smaller diameter than the front one (20; 20'), and the cutter sleeve (10; 10') of which has a recess, which is open towards the front and coaxial with the tool axis and which is formed with a small fitting tolerance complementarily to the shaft portions of differing diameter, and in the region of its front end face has a bearing surface (18; 18') perpendicular to the sleeve axis for the bearing surface of the end-milling cutter and receives a tensioning screw (30) which can be screwed into the end-milling cutter from behind, there being provided on one bearing surface at least one entrainment means (58; 58') projecting beyond the latter and there being provided in the other bearing surface a corresponding groove-shaped recess (32; 32') into which the entrainment means can be inserted in a fitting manner for a clearance-free rotational connexion between the end-milling cutter and the cutter sleeve, characterized in that the distance (a) of the rear end of the rear cylindrical shaft portion (22; 22') from the bearing surface (18; 18') of the end-milling cutter (12; 12') is at least equal to 1.5 times the diameter of the said shaft portion, the fitting tolerance for the rear shaft portion (22; 22') is less than for the front shaft portion (20; 20') and the recess (32; 32') for the entrainment means (58; 58') is offset with respect to a diameter (D) towards the rotational direction (R) of the tool.

2. A combination tool according to Claim 1, characterized in that the lengths of the portions (50; 52) of the sleeve recess belonging to the shaft portions (20; 20', 22; 22') of differing diameter are greater than the lengths of the corresponding shaft portions.

3. A combination tool according to Claim 1, characterized in that, in order to facilitate the insertion of the entrainment means (58; 58') into the recess (34; 34'), the walls thereof defining the latter in the rotational direction and in the opposite direction are made convex in the radial and/or axial direction.

4. A combination tool according to Claim 1, characterized in that the cutter sleeve is provided with a chucking apparatus for tightening the end-milling cutter in the radial direction.

## Revendications

1. Outillage à combinaison se composant d'une fraise à queue (12; 12') et d'un fourreau (10; 10') relié de manière fixe en rotation, par liaison positive à cette fraise, pouvant être logé dans une broche de travail, la fraise présentant dans sa zone arrière, une face (18; 18') d'appui perpendiculaire à l'axe de la queue et tournée vers son extrémité arrière et derrière cette face, deux tronçons de queue (20; 20', 22; 22') placés l'un derrière l'autre, de forme cylindrique et coaxiaux à la queue, le tronçon arrière (22; 22') ayanat un diamètre inférieur au tronçon avant (20; 20'), et dont le fourreau (10; 10') comporte un évidement ouvert vers l'avant et coaxial à l'axe de l'outillage, qui est complémentaire aux tronçons de tige de diamètre différent avec une petite tolérance d'ajustement, et au voisinage de son extrémité frontale avant, une face d'appui (48) perpendiculaire à l'axe du fourreau pour la face d'appui de la fraise et reçoit une vis de serrage (30) vissable par l'arrière dans la fraise, sur l'une des faces d'appui étant prévu au moins un taquet (58; 58') dépassant celle-ci et dans l'autre face d'appui étant prévu un évidement correspondant (32; 32') en forme de gorge dans lequel le taquet peut être introduit à la cote entre la fraise et le fourreau pour obtenir une jonction en rotation sans jeu, caractérisé en ce que la distance (a) entre la partie arrière du tronçon de queue (22; 22') cylindrique arrière et la face d'appui (18; 18') de la fraise à queue (12; 12') est au moins 1,5 fois le diamètre de ce tronçon de queue, la tolérance d'ajustement pour le tronçon de queue (22; 22') arrière est plus petite que celle pour le tronçon de queue (20; 20') avant et l'évidement (32; 32') pour le taquet (58; 58') est décalé dans le sens contraire au sens de rotation de l'outillage (R) par rapport à un diamètre (D).

2. Outillage à combinaison suivant la revendication 1, caractérisé en ce que les longueurs des tronçons (50, 52) de l'évidement de fourreau convenant aux tronçons de queue (20; 20'; 22, 22') de diamètre différent sont plus importantes que les longueurs des tronçons de tige correspondants.

3. Outillage à combinaison suivant la revendication 1, caractérisé en ce que les dernières parois limitant l'évidement (32'; 34') dans le sens de rotation ainsi que dans le sens opposé ont une forme bombée dans le sens radial et/ou axial pour faciliter l'introduction du taquet (58', 60') dans l'évidement (32'; 34').

4. Outillage à combinaison suivant la revendication 1, caractérisé en ce que le fourreau est pourvu d'un dispositif de serrage à force pour retirer la fraise à queue dans le sens axial.

Fig. 1

Fig. 2

0 050 344

Fig. 3

Fig. 4